# FASCICULE DE BREVET EUROPEEN

(11) **EP 1 250 219 B1**
(45) Date de publication et mention de la délivrance du brevet: **02.07.2003**
(21) Numéro de dépôt: 01907705.6
(22) Date de dépôt: 26.01.2001
(51) Int. Cl.: B26F 1/14, B23P 5/00

(54) **ENSEMBLE DE SUPPORT DE POINCONS, PROCEDE DE FABRICATION ET APPAREIL EN FAISANT USAGE**
LOCHSTEMPELTRÄGERANORDNUNG, SOWIE VERFAHREN ZUR DEREN HERSTELLUNG UND VORRICHTUNG UNTER VERWENDUNG DERSELBEN
PUNCH SUPPORT ASSEMBLY, METHOD FOR MAKING SAME AND APPLIANCE USING SAME

(30) Priorité: 27.01.2000 FR 0001021
(43) Date de publication de la demande: 23.10.2002
(73) Titulaire: Fellowes France, 35510 Cesson-Sevigne (FR)
(72) Inventeur: FREMONT, Roger, F-53810 Change (FR); NICOUD, Daniel, F-49000 Angers (FR)
(74) Mandataire: Branger, Jean-Yves
(86) Numéro de dépôt international: FR0100247
(87) Numéro de publication internationale: WO01054871

(56) Documents cités:
- EP-A- 0 993 885
- WO-A-93/24289
- US-A- 4 079 647

## Description

La présente invention se rapporte à un ensemble de support de poinçons cylindriques monobloc.

Elle se rapporte également à un procédé de fabrication d'un tel ensemble, ainsi qu'à un appareil de perforation de la zone de bordure d'une feuille ou d'une pile de feuilles faisant usage de cet ensemble.

De nombreuses machines de perforation de feuilles utilisent des poinçons permettant de réaliser des perforations de forme carrée ou rectangulaire.

Généralement, ces poinçons sont constitués de "doigts" parallèles, à extrémité libre coupante, et dont la section droite est identique à celle des perforations à réaliser, c'est à dire carrée ou rectangulaire. Ces poinçons sont d'une pièce avec un corps rectangulaire s'étendant perpendiculairement. L'ensemble est obtenu par découpage d'une plaque métallique, généralement plane. La pièce a l'allure générale d'un peigne. Le document US-A-4 079 647 en donne un exemple selon le préambule de la revendication 1, qui définie l'invention.

Le fait d'avoir à sa disposition un ensemble de support de poinçons monobloc permet de simplifier la structure de l'appareil dans lequel il est amené à être intégré, notamment en en réduisant le nombre de pièces.

Les feuilles ainsi perforées sont ultérieurement reliées à l'aide d'une reliure à dents recourbées, dite "reliure à peigne".

On connaît par ailleurs des appareils de perforation permettant de réaliser dans les feuilles une ligne d'ouvertures circulaires, leur assemblage ultérieur étant réalisé au moyen d'une reliure hélicoïdale.

Jusqu'ici, pour des raisons de fabrication, on utilise des poinçons cylindriques individuels et coulissants, dont l'extrémité est prévue coupante.

L'appareil de reliure est pourvu d'un organe permettant de déplacer sélectivement les poinçons pour les déplacer en direction des feuilles, en vue du poinçonnage.

Les poinçons sont prévus démontables, de sorte qu'il est relativement fréquent que l'on en égare un certain nombre.

De plus, un tel appareil a nécessairement une structure complexe du fait de son nombre important de pièces, de sorte que son coût de revient est relativement élevé.

On décrit dans EP-A-0 993 885 un dispositif de poinçonnage de matériaux se présentant sous la forme de feuilles.

Cette demande constitue un état de la technique au sens de l'Article 54(3) CBE.

Il y est décrit un support de poinçons, ces derniers ayant une forme cylindrique de révolution. Il est précisé que ces poinçons sont solidaires d'un support, lequel est destiné à être inséré, avec d'autres supports du même type, dans une pièce de réception.

La présente invention vise donc à résoudre les problèmes présentés plus haut en proposant un ensemble de support de poinçons cylindriques du même type général que celui présenté dans le document précité.

Elle vise à proposer également un procédé de fabrication d'un tel ensemble, ainsi qu'un appareil de perforation qui en fait usage.

L'ensemble de support est formé d'une plaque plane, notamment métallique, comprenant un corps généralement rectangulaire, le long d'un grand côté duquel s'étend une série de doigts parallèles, ce qui lui confère l'allure générale d'un peigne.

Les doigts sont d'une seule pièce avec ledit corps, qu'ils présentent une partie d'extrémité constituant poinçon qui présente une forme cylindrique, ainsi qu'une zone ou région antérieure de section plus réduite, centrée sur l'axe des doigts.

Dans l'ensemble de la présente demande, y compris les revendications, l'expression "forme cylindrique" doit être prise dans son acception la plus générale. Elle définit donc une forme générée par une droite fictive qui se déplace parallèlement à elle-même, en s'appuyant sur une courbe directrice.

Par conséquent, la section droite des poinçons peut par exemple être circulaire, ovale ou s'inscrire dans un carré dont les angles ont été arrondis.

Le fait de pouvoir disposer d'une seule et unique pièce pourvue de poinçons cylindriques va permettre, comme le comprend aisément, de simplifier la structure des machines de perforation qui en seront équipées, comme c'est le cas déjà avec les machines de perforation permettant de réaliser des trous carrés ou rectangulaires.

Par ailleurs, selon d'autres caractéristiques de cet ensemble :
- la face libre de la partie d'extrémité des doigts présente un profil concave ;
- lesdits poinçons présentent des longueurs différentes.

Selon un second aspect, l'invention concerne un procédé de fabrication d'un ensemble tel que celui décrit ci-dessus.

Ce procédé est caractérisé par le fait que l'on met en oeuvre successivement les étapes suivantes qui consistent à :
- a) découper une plaque plane, notamment métallique, de façon à y former un corps généralement rectangulaire et, le long d'un grand côté de celui-ci, une série de doigts parallèles ;
- b) former dans les faces transversales des doigts, c'est à dire disposées selon l'épaisseur de la plaque, et dans une région antérieure située au-dessus de leur partie d'extrémité, dite active, des découpes visant à réduire leur largeur ;
- c) procéder au lamage des faces frontale et arrière des doigts, de façon à réduire leur épaisseur dans la région où ont été préalablement réalisées lesdites découpes ;
- d) fraiser la partie d'extrémité dite active des doigts, de façon à les conformer en poinçons cylindriques, la section de ladite région antérieure s'inscrivant dans le profil de ladite partie d'extrémité cylindrique.

Selon certaines caractéristiques avantageuses de ce procédé :
- les étapes a) et b) sont mises en oeuvre lors d'une seule et même opération de découpe ;
- l'on procède au fraisage de la face libre de la partie d'extrémité des doigts, de façon à lui donner un profil concave ;
- ladite étape de fraisage est réalisée préalablement à l'étape c) ;
- l'étape d) est mise en oeuvre en deux temps, à savoir un fraisage grossier au cours duquel seuls les zones d'angle de la partie d'extrémité des doigts sont éliminées, et un fraisage plus fin qui confère à ladite partie une forme cylindrique ;
- le procédé est mis en oeuvre au moyen d'une machine à commande numérique.

Enfin, la présente invention se rapporte à un appareil de perforation de la zone de bordure d'une feuille ou d'un ensemble de feuilles faisant usage de l'ensemble tel que décrit ci-dessus ou obtenu par la mise en oeuvre du procédé dont il a été fait état plus haut.

D'autres caractéristiques et avantages de l'invention apparaîtront à la lecture de la description détaillée qui va suivre d'un mode de réalisation préféré. Cette description sera faite en référence aux dessins annexés dans lesquels :
- la figure 1 est une vue de face d'un ensemble de support de poinçons cylindriques monobloc conforme à l'invention ;
- la figure 2 est une vue en perspective de l'ensemble de la figure 1 ;
- les figures 3 à 7 sont des vues partielles de face de l'ensemble des figures 1 et 2, destinées à illustrer les premières étapes d'un procédé de fabrication possible ;
- les figures 8 et 9 sont des vues partielles de dessous de l'ensemble des figures précédentes, destinées à illustrer les dernières étapes de son procédé de fabrication possible ;
- les figures 10 à 12 sont des schémas en perspective de l'extrémité "active" d'un poinçon dudit ensemble, montrant ses différentes formes successives au cours du procédé de fabrication ;
- la figure 13 est une vue en perspective d'un appareil de perforation de feuilles comportant un ensemble conforme à l'invention ;
- la figure 14 est une vue de face de l'appareil de la figure 13, représentée sans son capot de protection.

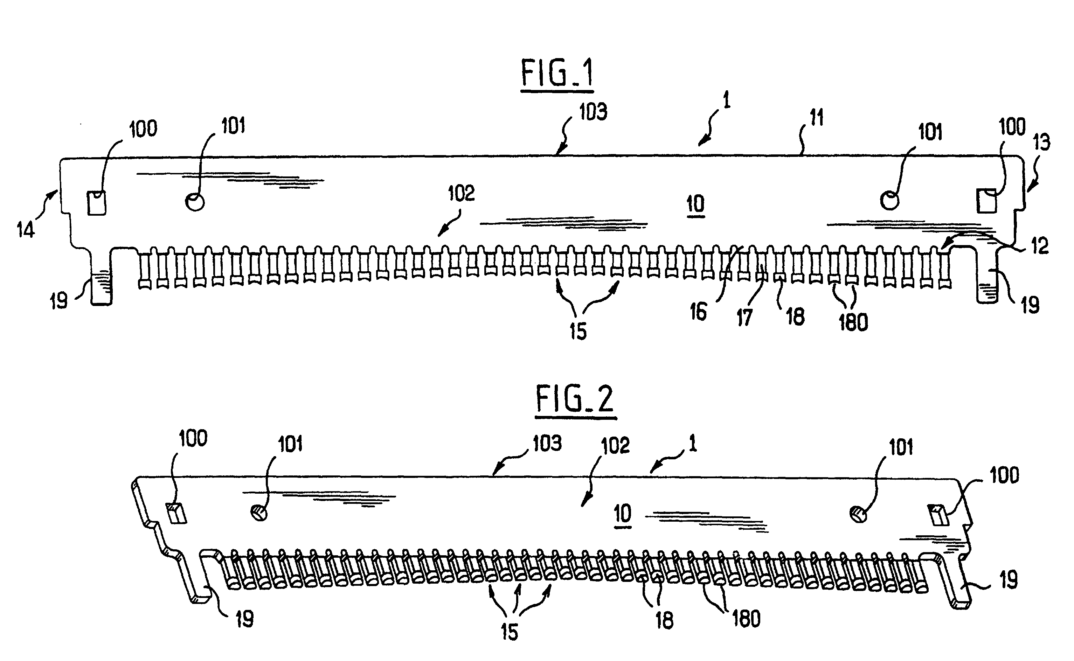

L'ensemble 1 de support de poinçons, tel qu'il est représenté sur les figures 1 et 2, présente une physionomie générale analogue à celle des supports connus, dont les poinçons présentent une section droite carrée ou rectangulaire, permettant de réaliser dans les feuilles des perforations à contour carré, respectivement rectangulaire.

Plus précisément, cet ensemble 1 est constitué d'une plaque plane, de préférence métallique, de quelques millimètres d'épaisseur, qui a été travaillée pour constituer ledit ensemble.

Il est constitué d'un corps généralement rectangulaire 10, le long d'un des grands côtés duquel s'étend une série de doigts parallèles 15.

Par l'expression " généralement rectangulaire", on entend le fait que ce corps s'inscrit dans un rectangle.

Les "grands côtés" de ce rectangle sont référencés 11 et 12, tandis que ses "petits côtés" sont référencés 13 et 14. Il est à noter que ces derniers ne sont pas strictement rectilignes, mais présentent un profil en "marche d'escalier", notamment à cause d'impératifs de guidage de l'ensemble au sein de l'appareil de reliure qu'il est destiné à équiper.

Dans une forme de réalisation non représentée, le grand côté 11 du corps pourrait présenter une forme bombée.

Dans le corps 10 sont formées, à proximité des petits côtés 13 et 14, des ouvertures de contour rectangulaire 100 dont la fonction est, au sein de l'appareil de reliure dans lequel l'ensemble est destiné à être intégré, de recevoir, le cas échéant, des moyens permettant à cet ensemble de se mouvoir en translation en vue de la perforation des feuilles.

Le corps 10 comporte par ailleurs deux ouvertures circulaires 101 dont la fonction est d'y permettre l'introduction de moyens de fixation visant à améliorer la stabilité du corps, lors d'opérations d'usinage ultérieures.

Les doigts 15 précités s'étendent le long du grand côté 12 du corps 10 et perpendiculairement à celui-ci.

La série de doigts est encadrée par une paire de pattes 19, d'une seule pièce avec le corps 12, et dont la section ainsi que la longueur sont plus importantes que celle des doigts.

Ces pattes sont destinées à servir de moyens de guidage en translation de l'ensemble 1, lorsque celui-ci est intégré au sein d'une machine de reliure. Elles peuvent, le cas échéant, recevoir des ressorts visant à ramener cet ensemble dans une position inactive dans laquelle les poinçons sont écartés des feuilles.

Les doigts 15 présentent des hauteurs différentes, de sorte que la ligne fictive passant par leur extrémité libre décrit une courbe concave. Cette répartition, qui se rencontre également avec des poinçons permettant de réaliser des perforations carrées ou rectangulaires, permet une perforation progressive des feuilles, sans effort exagéré sur l'ensemble. Bien entendu, toute autre répartition peut être adoptée.

Chaque doigt comporte une base 16 qui forme partie intégrante du corps 10.

Cette base se prolonge par une partie intermédiaire 17, dite antérieure, dont la section transversale est plus petite que celle de la base.

Enfin, cette partie intermédiaire 17 se poursuit par une zone d'extrémité 18, dite active et constituant poinçon, de forme cylindrique. Dans l'exemple représenté ici, il s'agit d'une forme cylindrique de révolution.

C'est cette zone d'extrémité qui va permettre de réaliser le poinçonnage des feuilles.

De manière connue en soi, la face libre de la partie d'extrémité 18, référencée 180 sur les figures, présente un profil courbe et concave.

Cette caractéristique permet un meilleur poinçonnage des feuilles, en les entamant progressivement en non pas d'un seul coup.

Selon un mode de réalisation non représenté, le profil concave pourrait avoir la forme d'un "V" renversé. Par ailleurs, la partie d'extrémité 18 peut éventuellement présenter une dépouille, de façon à lui conférer une forme tronconique, leur zone "supérieure", dirigée vers la partie intermédiaire 17, étant plus resserrée que leur zone "inférieure" libre débouchant sur la face 180.

Nous allons maintenant décrire un procédé de fabrication d'un ensemble de support de poinçons tel que celui décrit en référence aux figures 1 et 2.

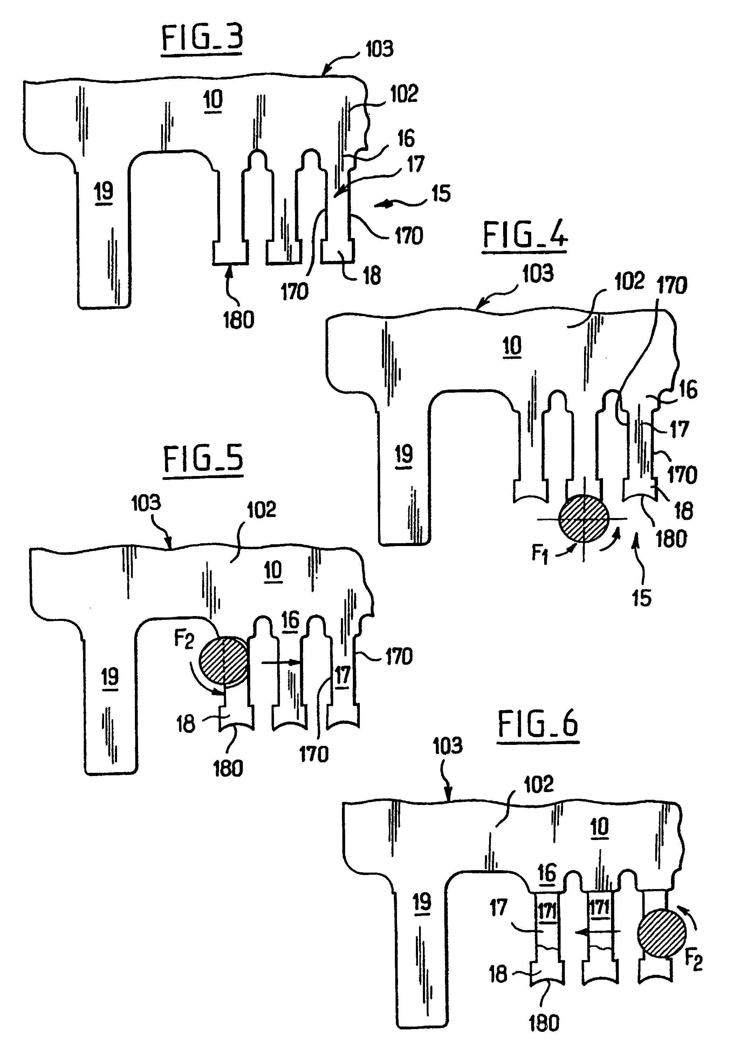

Cette description sera faite notamment en référence aux figures 3 à 12.

La première étape du procédé consiste à découper une plaque plane, notamment métallique, de façon à y former un corps 10 généralement rectangulaire et, le long d'un grand côté 12 de celui-ci, une série de doigts parallèles 15.

Cette découpe peut être réalisée par tout moyen adéquat. Toutefois, une méthode de découpage au rayon laser est particulièrement appropriée dans la mesure où elle permet d'obtenir un contour de pièce particulièrement soigné. Cette méthode de découpage est par ailleurs particulièrement préférée, dans la mesure où elle permet de travailler rapidement.

La seconde étape du procédé consiste à former dans les faces transversales des doigts 15, c'est-à-dire les faces disposées selon l'épaisseur de la plaque, et dans une région antérieure 17 située au-dessus de leur partie d'extrémité 18, des découpes 170 destinées à réduire leur largeur.

A l'issue de cette étape, les doigts présentent la forme telle qu'illustrée à la figure 3. Sur cette figure, ainsi que les suivantes, les trois doigts représentés ont volontairement la même longueur, de façon à simplifier les dessins.

Dans un mode de réalisation préféré, les deux étapes qui viennent d'être décrites sont mises en oeuvre lors d'une seule et même opération de découpe. Cela signifie que lorsqu'on a recours à un rayon laser, celui-ci va délimiter le contour des doigts 15 tout en découpant au sein de ceux-ci les découpes 170 précitées.

A ce stade, la section droite des doigts est rectangulaire, que ce soit au niveau de la base 16, de la région antérieure 17, que de la partie d'extrémité dite "active" 18.

A ce stade, la face libre 180 de la partie d'extrémité 18, qui est disposée selon l'épaisseur des doigts 15, est strictement plane et verticale lorsque la plaque est posée par une de ses grandes faces sur un support horizontal.

L'étape suivante consiste à fraiser cette face libre 180 de façon à lui donner un profil concave. Ce traitement a été illustré à la figure 4 dans laquelle a été représentée symboliquement une fraise **F**_{**1**}**,** dont l'axe de rotation s'étend perpendiculairement au plan dans lequel sont contenus les doigts 15.

On comprend aisément qu'en approchant la fraise, par sa face périphérique cylindrique, de la face 180, on va conformer celle-ci de façon à leur donner un profil concave, par enlèvement de copeaux.

Bien entendu, cette opération de fraisage doit être renouvelée pour chacun des doigts 15.

L'étape qui vient d'être décrite est de préférence réalisée à ce stade, du fait que la partie d'extrémité 18 va être ultérieurement travaillée, de manière à en modifier les dimensions et la forme.

L'opération de fraisage pourrait être mise en oeuvre après ces traitements, mais risquerait d'aboutir à une face 180 comportant des bavures indésirables.

Dans une étape ultérieure, on procède au lamage des faces frontale et arrière des doigts. Cette étape est particulièrement visible aux figures 5 et 6.

Elle consiste précisément, à l'aide d'une fraise **F**_{**2**}**,** à procéder à un enlèvement de matière, au niveau des doigts 15, dans le plan des grandes faces avant 102 et arrière 103 de l'ensemble 1.

Cette opération de lamage est limitée à la région des doigts dans laquelle ont été réalisées préalablement les découpes 170. On obtient ainsi une zone lamée 171 sur chacune des faces avant et arrière, qui se trouve en deçà du niveau de la base 16 et de la partie d'extrémité 18 des doigts 15.

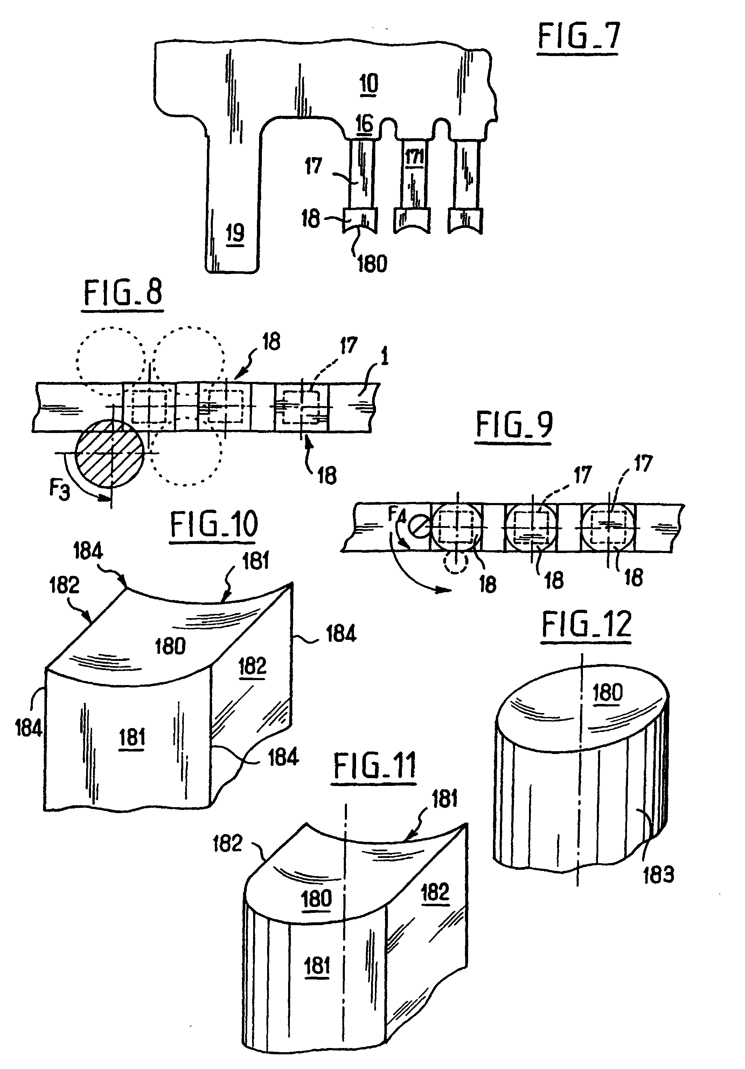

Ceux ci ont alors la physionomie présentée à la figure 7. Leur région antérieure 17 présente une section droite plus réduite que celles de la base 16 et la partie d'extrémité 18, tout en étant centrée sur l'axe des doigts.

Bien entendu, en fonction de la profondeur du lamage effectué préalablement, on aura une région antérieure 17 présentant soit une section carrée, soit une section rectangulaire. Dans le cas présent, il s'agit d'une section carrée.

La dernière étape du procédé selon l'invention consiste à fraiser la partie d'extrémité 18 dite "active" des doigts 15 de façon à les conformer en poinçons cylindriques, tout en s'arrangeant pour que la section de la région antérieure 17 s'inscrive dans le profil de cette partie d'extrémité cylindrique.

Dans le procédé présenté sur les figures, cette étape est mise en oeuvre en deux temps.

Elle comprend d'abord, selon la figure 8, un fraisage grossier au cours duquel seuls les angles de la partie d'extrémité des doigts sont éliminés, ainsi qu'un fraisage plus fin (selon la figure 9) qui confère à ladite partie d'extrémité une forme cylindrique.

Plus précisément, le fraisage grossier consiste à déplacer une fraise **F**_{**3**} animée d'un mouvement de rotation sur elle-même, son axe étant parallèle à l'axe longitudinal des doigts. Le mouvement décrit par la fraise est un mouvement en arc de cercle centré sur l'axe des doigts 15 et dont le rayon est tel que la fraise peut éliminer successivement la matière située dans les quatre angles 184 de la partie d'extrémité 18.

On part donc d'une forme telle qu'illustrée à la figure 10 pour obtenir une forme intermédiaire telle que celle illustrée à la figure 11.

L'étape de fraisage plus fin consiste à utiliser une fraise **F**_{**4**} de diamètre plus réduit et à la déplacer selon un mouvement circulaire centré sur les doigts de manière à découper la surface externe de la partie 18, de manière à lui donner un contour strictement cylindrique 183 (voir figure 12).

Bien entendu, ces deux opérations de fraisage peuvent être remplacées par une seule et même opération conduisant à l'obtention d'une forme cylindrique.

Finalement, on obtient un ensemble, dont les extrémités des doigts, qui forment poinçons, sont cylindriques.

· L'ensemble des opérations qui viennent d'être décrites peut être réalisé par un centre d'usinage de marque UGV, utilisant une broche tournant à une vitesse maximum de 25 000 tours par minute, et équipé d'une roto-palette ainsi qu'un chargeur d'outils (fraises) automatique.

A titre indicatif, la plus grande dimension de l'ensemble 1 peut être de l'ordre de 340 mm tandis que sa largeur, doigts compris, peut être de l'ordre de 50 mm. L'épaisseur de la plaque peut être, quant à elle, de l'ordre de 4 mm.

L'ensemble 1 qui vient d'être décrit peut être utilisé dans n'importe quel appareil de poinçonnage du marché, sans nécessiter de modifications importantes.

En particulier, cet ensemble peut être facilement intégré au sein de l'appareil qui fait l'objet de la demande de brevet N° 00 00433 du 14 janvier 2000 au nom du demandeur, et non publiée à ce jour.

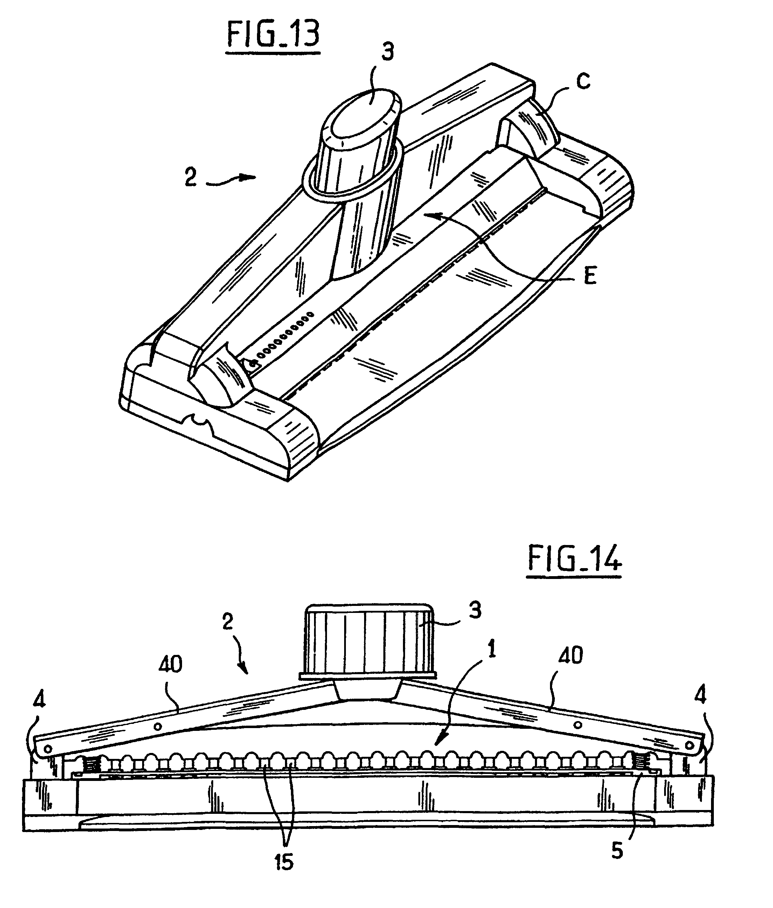

Un exemple d'un tel appareil est illustré aux figures 13 et 14. Celui-ci, référencé 2, permet de procéder à la perforation de feuilles, par introduction de celles-ci dans un espace E situé à la base d'un capot de protection C et appui sur un poussoir 3.

Comme montré à la figure 14, le capot C abrite un ensemble 1 tel que celui décrit précédemment. Toutefois, pour faciliter la consultation de la figure, on a volontairement limité le nombre de doigts 15 de l'ensemble et augmenté leur taille.

L'ensemble 1 est guidé verticalement par rapport à deux plots 4 qui l'encadrent. Sa translation en direction des feuilles à poinçonner est obtenue par pivotement de deux leviers symétriques 40 articulés sur les plots et qui prennent appui contre le bord supérieur de l'ensemble.

Le mouvement de pivotement des leviers est obtenu par l'actionnement du poussoir 3 qui repose sur leur extrémité libre.

Lors de la translation de l'ensemble 1, les parties d'extrémité 18 formant poinçons des doigts 15 sont reçues dans une pièce de guidage 5 sous laquelle les feuilles à perforer ont été introduites précédemment. Ces poinçons perforent les feuilles et sont reçus dans la base de l'appareil, au travers d'ouvertures prévues à cet effet.

On pourra bien entendu se reporter au texte de la demande précitée pour avoir plus de détails sur la structure et le fonctionnement de l'appareil.

## Revendications

1. Ensemble de support de poinçons, qui est formé d'une plaque plane (1), notamment métallique, comprenant un corps (10) généralement rectangulaire, le long d'un grand côté (12) duquel s'étend une série de doigts parallèles (15), ce qui lui confère l'allure générale d'un peigne, les doigts (15) étant d'une seule pièce avec ledit corps (10), **caractérisé par le fait que** les doigts (15) présentent une partie d'extrémité (18) formant poinçons de forme cylindrique, ainsi qu'une zone ou région antérieure (17) de section droite plus réduite, centrée sur l'axe des doigts.

2. Ensemble selon la revendication 1, **caractérisé par le fait que** la face libre (180) de la partie d'extrémité (18) des doigts (15) présente un profil concave.

3. Ensemble selon la revendication 1 ou 2, **caractérisé par le fait que** lesdits poinçons (15) présentent des longueurs différentes.

4. Procédé de fabrication d'un ensemble de support de poinçons selon l'une des revendications 1 à 3, **caractérisé par le fait que** l'on met en oeuvre successivement les étapes suivantes qui consistent à :
- a) découper une plaque plane, notamment métallique, de façon à y former un corps (10) généralement rectangulaire et, le long d'un grand côté, de celui-ci, une série de doigts parallèles (15) ;
- b) former dans les faces transversales des doigts (15), c'est à dire disposées selon l'épaisseur de la plaque, et dans une région (17) antérieure située au-dessus de leur partie d'extrémité (18), dite active, des découpes (170) visant à réduire leur largeur ;
- c) procéder au lamage des faces frontale (102) et arrière (103) des doigts (15), de façon à réduire leur épaisseur dans la région où ont été préalablement réalisées lesdites découpes (170) ;
- d) fraiser la partie d'extrémité (18) dite active des doigts (15), de façon à les conformer en poinçons cylindriques, la section de ladite région antérieure (17) s'inscrivant dans le profil de ladite partie d'extrémité cylindrique.

5. Procédé selon la revendication 4, **caractérisé par le fait que** les étapes a) et b) sont mises en oeuvre lors d'une seule et même opération de découpe.

6. Procédé selon la revendication 4 ou 5, **caractérisé par le fait que** l'on procède au fraisage de la face libre (180) de la partie d'extrémité (18) des doigts (15), de façon à lui donner un profil concave.

7. Procédé selon la revendication 6, **caractérisé par le fait que** ladite étape de fraisage est réalisée préalablement à l'étape c).

8. Procédé selon l'une des revendications 4 à 7, **caractérisé par le fait que** l'étape d) est mise en oeuvre en deux temps, à savoir un fraisage grossier au cours duquel seuls les zones d'angle (184) de la partie d'extrémité (18) des doigts (15) sont éliminées, et un fraisage plus fin qui confère à ladite partie (18) une forme cylindrique ;

9. Procédé selon l'une des revendications 4 à 8, **caractérisé par le fait qu'**il est mis en oeuvre au moyen d'une machine à commande numérique.

10. Appareil de perforation de la zone de bordure d'une feuille ou d'un ensemble de feuilles, **caractérisé par le fait qu'**il est équipé d'un ensemble (1) de support de poinçons conforme à l'une des revendications 1 à 3, notamment susceptible d'être obtenu par la mise en oeuvre du procédé selon l'une des revendications 4 à 9.

## Patentansprüche

1. Lochstempelträgeranordnung, welche aus einer flachen, insbesondere metallischen Platte (1) besteht, mit einem allgemein rechteckigen Körper (10), entlang dessen einer langen Seite (12) sich eine Reihe paralleler Finger (15) erstreckt, was ihr das allgemeine Aussehen eines Kammes verleiht, wobei die Finger (15) in einem Stück mit dem Körper (10) ausgebildet sind, **dadurch gekennzeichnet, dass** die Finger (15) einen Endbereich (18) aufweisen, der Lochstempel mit zylindrischer Form bildet, sowie eine davor liegende Zone oder einen davor liegenden Bereich (17) mit geringerem Querschnitt, der auf der Achse der Finger zentriert ist.

2. Anordnung gemäß Anspruch 1, **dadurch gekennzeichnet, dass** die freie Fläche (180) des Endbereichs (18) der Finger (15) ein konkaves Profil aufweist.

3. Anordnung gemäß Anspruch 1 oder 2, **dadurch gekennzeichnet, dass** die Lochstempel (15) verschiedene Längen aufweisen.

4. Verfahren zur Herstellung einer Lochstempelträgeranordnung gemäß einem der Ansprüche 1 bis 3, **dadurch gekennzeichnet, dass** hintereinander die folgenden Schritte durchgeführt werden, welche daraus bestehen:
- a) eine flache, insbesondere metallische Platte derart auszuschneiden, dass daraus ein allgemein rechteckiger Körper (10) und entlang einer seiner großen Seiten eine Reihe von parallel zueinander liegenden Fingern (15) entstehen;
- b) in den Querflächen der Finger (15), d.h. denjenigen, welche entlang der Dicke der Platte angeordnet sind, und in einem davor liegenden Bereich (17), der oberhalb ihres so genannten aktiven Endbereichs (18) liegt, Ausschnitte (170) auszubilden, die dazu dienen ihre Breite zu verringern;
- c) ein Stirnsenken der Vorder- (102) und Rückseite (103) der Finger (15) derart vorzunehmen, dass ihre Dicke in den Bereich verringert wird, wo zuvor die Ausschnitte (170) ausgebildet worden sind;
- die so genannten aktiven Endbereiche (18) der Finger (15) derart auszufräsen, dass sie zu zylindrischen Lochstempeln ausgebildet werden, wobei sich der Querschnitt des davor liegenden Bereichs (17) in das Profil des zylindrischen Endbereichs einfügt.

5. Verfahren gemäß Anspruch 4, **dadurch gekennzeichnet, dass** die Schritte a) und b) während eines einzigen und gleichen Ausschneidevorgangs durchgeführt werden.

6. Verfahren gemäß Anspruch 4 oder 5, **dadurch gekennzeichnet, dass** das Ausfräsen der freien Fläche (180) des Endbereichs (18) der Finger (15) derart durchgeführt wird, dass ihr ein konkaves Profil gegeben wird.

7. Verfahren gemäß Anspruch 6, **dadurch gekennzeichnet, dass** der Schritt des Ausfräsens vor dem Schritt c) durchgeführt wird.

8. Verfahren gemäß einem der Ansprüche 4 bis 7, **dadurch gekennzeichnet, dass** der Schritt d) in zwei Stufen durchgeführt wird, nämlich ein grobes Fräsen, im Verlauf dessen nur die Winkelbereiche (184) des Endbereichs (18) der Finger (15) weggenommen werden, und ein feineres Fräsen, welches dem Bereich (18) eine zylindrische Form verleiht.

9. Verfahren gemäß einem der Ansprüche 4 bis 8, **dadurch gekennzeichnet, dass** es mittels einer Maschine mit Digitalsteuerung durchgeführt wird.

10. Vorrichtung zum Lochen des Randbereichs eines Blattes oder einer Gruppe von Blättern, **dadurch gekennzeichnet, dass** sie mit einer Lochstempelanordnung (1) gemäß einem der Ansprüche 1 bis 3 ausgestattet ist, die insbesondere unter Durchführung des Verfahrens gemäß einem der Ansprüche 4 bis 9 hergestellt werden kann.

## Claims

1. A punch support assembly made from a plane plate (1), in particular a metal plate, comprising a generally rectangular body (10) with a series of parallel fingers (15) extending from a long side (12) thereof, thus giving it the general appearance of a comb, the fingers (15) being integral with said body (10), the assembly being **characterized by** the fact that the fingers (15) present respective punch-forming end portions (16) that are cylindrically shaped, and respective anterior regions or zones (17) of smaller right section, centered on the axes of the fingers.

2. An assembly according to claim 1, **characterized by** the fact that the free faces (180) of the end portions (18) of the fingers (15) present a profile that is concave.

3. An assembly according to claim 1 or claim 2, **characterized by** the fact that said punches (15) present lengths that are different.

4. A method of manufacturing a punch support assembly according to any one of claims 1 to 3, **characterized by** the fact that the following steps are implemented in succession:
a) cutting out a plane plate, in particular a metal plate, in such a manner as to form therein a generally rectangular body (10) and, along a long side thereof, a series of parallel fingers (15);
b) forming cutouts (170) in the transverse faces of the fingers (15), i.e. in the faces occupying the thickness of the plate, and in anterior regions (17) thereof situated above their "active" end portions (18), the cutouts (170) serving to reduce their width;
c) rolling the front and rear faces (102, 103) of the fingers (15) in such a manner as to reduce their thickness in the region where said cutouts (170) have previously been made; and
d) milling the "active" end portions (18) of the fingers (15) so as to shape them into cylindrical punches, the section of said anterior regions (17) being contained within the profiles of said cylindrical end portions.

5. A method according to claim 4, **characterized by** the fact that steps a) and b) are implemented during a single cutting operation.

6. A method according to claim 4 or claim 5, **characterized by** the fact that the free faces (180) of the end portions (18) of the fingers (15) are milled so as to impart a concave profile thereto.

7. A method according to claim 6, **characterized by** the fact that said milling step is performed prior to step c).

8. A method according to any one of claims 4 to 7, **characterized by** the fact that step d) is implemented in two stages, namely coarse milling during which only the comer zones (184) of the end portions (18) of the fingers (15) are removed; and finer milling conferring a cylindrical shape to said portions (18).

9. A method according to any one of claims 4 to 8, **characterized by** the fact that it is implemented by means of a numerically controlled machine.

10. Apparatus for perforating the margin zone of a sheet or a set of sheets, the apparatus being **characterized by** the fact that it is fitted with a punch support assembly (1) in accordance with any one of claims 1 to 3, in particular an assembly suitable for being obtained by implementing the method according to any one of claims 4 to 9.
